# EUROPEAN PATENT SPECIFICATION

(11) **EP 4 186 342 B1**
(45) Date of publication and mention of the grant of the patent: **29.04.2026**
(21) Application number: 22207152.4
(22) Date of filing: 14.11.2022
(51) Int. Cl.: A01B 35/22, A01B 39/22

(54) **PLOUGHSHARE**
PFLUGSCHARE
SOC DE CHARRUE

(30) Priority: 30.11.2021 IT 202100030224
(43) Date of publication of application: 31.05.2023
(73) Proprietor: Torrico S.r.l., 36053 Gambellara (VI) (IT)
(72) Inventor: PEGORARO, Luciano, 36053 GAMBELLARA (VI) (IT)
(74) Representative: Burchielli, Riccardo

(56) References cited:
- EP-B1- 1 723 840
- EP-B1- 2 591 650
- WO-A1-2020/208664

## Description

The present invention relates to a device for agricultural work.

Specifically, the invention relates to a device for agricultural work that comprises an apparatus for working the soil and a support element, reversibly fixable to an agricultural vehicle to be towed.

It is common practice in agriculture to use agricultural apparatus generically referred to as cultivators; this class of apparatus comprises, among others, plows, point harrows, grubbers, scarifiers, subsoil plows, etc...

These apparatus comprise a plurality of working elements attached to a support frame of the mobile agricultural vehicle, e.g., a tractor, and arranged to carry out working procedures, e.g., subsoil ploughing, tillage, minimum working, etc...

The support frame can be fixed directly to the tractor or can be dragged by the tractor, such as by wheels.

Working apparatus can be of different shapes and sizes depending on the operation to be performed and are attached to support elements having a generally elongated and/or curved shape, called spring tines, which in turn are connected to the support frame. Relevant state of the art regarding this technical field are for example the following documents: WO 2020/208664 A1, EP 1 723 840 B1, EP 2 591 650 B1.

An agricultural apparatus, or cultivator, comprises a support frame provided with a plurality of aligned or staggered support elements, each attachable to a tool.

The tools are reversibly fixed to a connecting end of the support element, such as by screws or bolts.

Tool replacement operations, such as in the case of changing the work to be done on the soil, require time to be spent by the farmer in disassembling and reassembling the tools from their respective supports.

In addition, due to fouling, rust, dirt, mud, etc..., the fasteners can get stuck, making the unhooking operation longer and more difficult, especially if the cultivator comprises multiple supports, each with its respective tool.

In any case, the farmer must still have available, and at a specific time, the proper means to remove tool fasteners; moreover, in the case of bolts or similar, they can be easily lost once disassembled.

To circumvent these drawbacks, tools have been devised comprising an adapter, bolted to a free end of the support element, and configured to be engaged by a shank or stem of the agricultural working machine.

The tool can be mounted on the adapter and locked in the working position. For this aim, and in order to ensure that the tool does not disengage from the adapter during work, specific locking means are provided that mutually secure the tool and the adapter.

The aforementioned devices make it possible to simplify and speed up the procedures of mounting/dismounting tools to/from supports, but they also have some drawbacks.

In fact, the locking means can, due to fouling, rust, dirt, mud, etc..., get stuck hindering the detachment of the tool from the adapter.

In addition, the shank may become wedged and stuck to the adapter.

It is an aim of the present invention to improve known devices for agricultural work comprising a tool and a support element, which can be attached to an agricultural vehicle frame and reversibly coupled together.

Another aim of the invention is to make a device for agricultural work that allows a tool for agricultural work to be assembled or disassembled from a respective support element more easily and quickly.

It is also an aim of the invention to make a device for agricultural work that can be associated with an agricultural apparatus or cultivator, and that has a robust structure and a simple and reliable functioning.

Furthermore, it is an aim of the invention to provide a device for agricultural work that does not require specific instrumentation for its assembly and disassembly from the corresponding support element.

Finally, it is an aim of the present invention to provide a device for agricultural work that is more versatile, economical, and easier to use and replace than the prior art.

These and other aims are achieved by a device for agricultural work according to the attached claim 1.

Further technical details and features are achieved in the dependent claims.

The present invention will now be described, by way of illustration but not limitation, according to some of its preferred embodiments, and with the use of the attached figures, in which:
- figure 1 is a perspective view from above of a first embodiment of the device according to the invention;
- figure 2 is a perspective view from below of the embodiment of figure 1;
- figures 3A-3E are successive views of the functioning of the embodiment of figures 1 and 2;
- figure 4 is a top-down perspective view of a second embodiment of the device according to the invention;
- figure 5 is a side view of the embodiment of figure 4;
- figure 6 is a perspective view from below of the embodiment of figures 4 and 5;
- figures 7A-7E are successive views of the functioning of the embodiment form of figures 4-6;
- figure 8 is a perspective view of the device according to the invention and a support wherein the device can be attached.

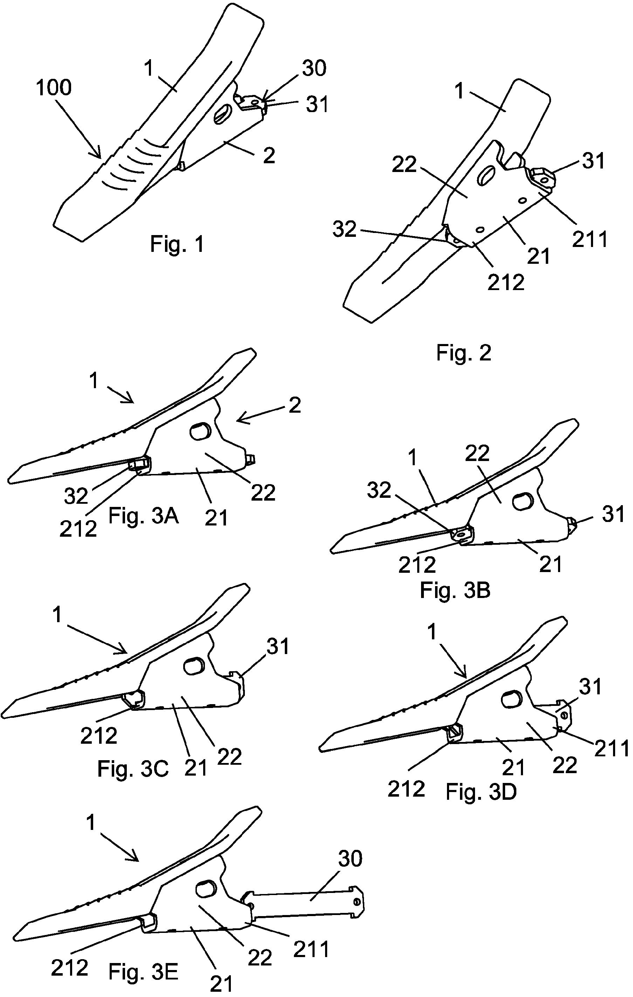

With reference to figures 1 and 2, is rapresented a first embodiment of a device 100 which is intended to be coupled to an agricultural apparatus for soil working.

In particular, it is represented a subsoiler tool that can be used for breaking up deeper or shallower layers of soil; it is clear that other types of tools may also be used, if their operation does not differ substantially.

The device 100 comprises a first operating portion 1 and a second coupling portion 2.

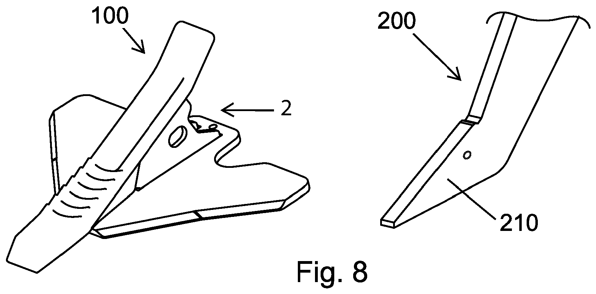

The operating portion 1 is intended to make at least partial contact with the soil to perform the working, while the coupling portion 2 is intended to be coupled to a working apparatus, which in turn is connected to a tractor machine (an example of an apparatus is shown in figure 8).

The second coupling portion 2 has a first lower surface 21 and one or more second side surfaces 22.

The lower surface 21 of the coupling portion 2 is separated by a predetermined distance from the operating portion 1, and has a first rear end 211 and a second front end 212.

The side surfaces 22 connect the lower surface 21 to the operating portion 1 of the device 100 to form a bracket.

In particular, the first surface 21 and the second surfaces 22 are shaped to provide an opening between each end 211, 212 of the first surface 21 and the operating portion 1.

In a preferred embodiment, the opening between the first end 31 and the operating portion 1 is wider than the opening between the second end 32 and the operating portion 1.

Therefore, lower surface 21 and the operating portion 1 are not parallel or aligned, respectively.

The operating portion 1 and the coupling portion 2 form a seat for the housing of a coupling member 3.

In the first embodiment, the coupling member 3 is a plate 30 complementary to the surface 21 of the coupling portion.

The plate 30 is shaped so that when it is inserted into the seat between the two portions 1 and 2, it is in contact with the surface 21 and fits on the same surface 21.

Referring to figure 8, operationally, the attachment of the coupling portion 2 of the device 100 on the support 200 is done by inserting the tip 210 of the support 200 into the space identified by the side surfaces 22, the lower surface 21, and the operating portion 1 of the device 100 itself.

In principle, plate 30 is inserted between coupling portion 2 and operating portion 1 and placed in contact with the first surface 21.

The plate 30 functions as a spacer and prevents the device 100 from moving or wobbling after the tip 210 is inserted.

Preferably, plate 30 has a larger cross section at the ends 31, 32 compared to its central portion.

The abutments made at the ends 31, 32 are positioned on the surface 21 so that they slightly protuding out, and their movement is hindered by the second surfaces 22 of the coupling portion 2.

This advantageously prevents the plate 30 from slipping on the surface 21 and locks it in place once it is inserted into its proper seat.

Removal of device 100 from the agricultural apparatus is accomplished by taking the following steps shown in figures 3A-3E.

Different types of supports can also be used.

After disengaging the tip 210 (figure 3A), the plate 30 is lifted (figure 3B) and tilted to an orientation such that it can slide relative to the surface 21 without interfering with the second surfaces 22 (figure 3C).

Plate 30 at this point can be totally disengaged (figures 3D and 3E) from its seat by sliding, and the tool can be removed from the agricultural apparatus.

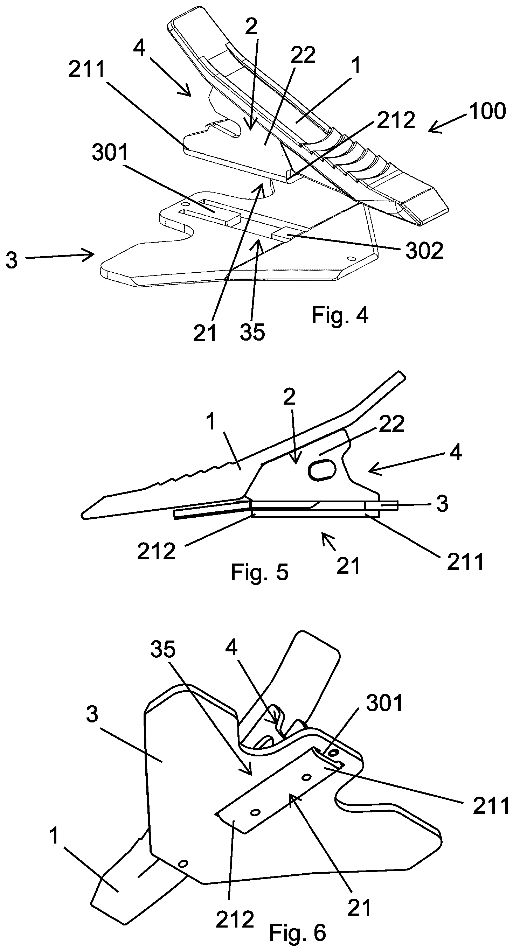

Referring to figures 4-6, a second embodiment of the device 100 is shown, again a subsoiler intended to be coupled to an agricultural apparatus for working the soil.

Device 100 comprises a first operating portion 1 and a second coupling portion 2.

The operating portion 1 is intended to make at least partial contact with the soil to perform the work, while the coupling portion 2 is intended to be coupled to the working apparatus attached to a tractor machine (an example is shown in figure 8).

The second coupling portion 2 has a first lower surface 21 and one or more second side surfaces 22.

The first surface 21 of the coupling portion 2 is separated from the operating portion 1 by a predetermined distance, and has a first end 211 and a second end 212.

The side surfaces 22 connect the first surface 21 to the operating portion 1 of device 100 to form a bracket.

In particular, the lower surface 21 and the side surfaces 22 are shaped to provide an opening between each end 211, 212 of the first surface 21 and the operating portion 1.

In a preferred embodiment, the opening between the first end 211 and the operating portion 1 is wider than the opening between the second end 212 and the operating portion 1.

Therefore, surface 21 and operating portion 1 are not parallel or aligned, respectively.

In addition, in such a second embodiment, the side surfaces 22 have a recess 4 at the rear end 211 of the coupling portion 2.

The operating portion 1 and the coupling portion 2 form a seat for housing a coupling member 3.

The embodiment of figures 4-6 comprises a coupling member 3 for performing agricultural works on the ground.

In the embodiment shown, coupling member 3 is a plate with a slit 35 and two triangular-shaped side portions.

The shape of the coupling member 3 may also vary, for example, depending on the operation to be performed or the depth of soil to be worked, and may have more or less extended side portions of various lengths and shapes.

Preferably, the slit 35 is rectangular, and possesses a length and width substantially equal to those of the first surface 21.

The coupling member 3 comprises a first rear protuding portion 301 and a second front protuding portion 302, each positioned at a short side of the rectangle of the slit 35.

Each protuding portion 301, 302 extends away from each short side of the rectangle, along a direction substantially aligned with the long sides thereof and with the direction of advancement of the device 100 into the ground to be worked.

Preferably, the rear protuding portion 301 has a greater length than the front protuding portion 302.

The slit 35 is intended to accommodate the coupling portion 2 of the device 100 when the device 100 is in use, making contact with each protuding portion 301, 302.

When in use, the device 100 is firmly coupled to the coupling member 3 by means of the coupling portion 2.

The coupling portion 2 is inserted into the slit 35, the front protuding portion 302 and/or the rear protuding portion 301 are in contact with the lower surface 21 so as to keep the device 100 locked by interference.

In contrast, the side surface 22 is in a position adjacent to one or both of the protuding portions 301, 302.

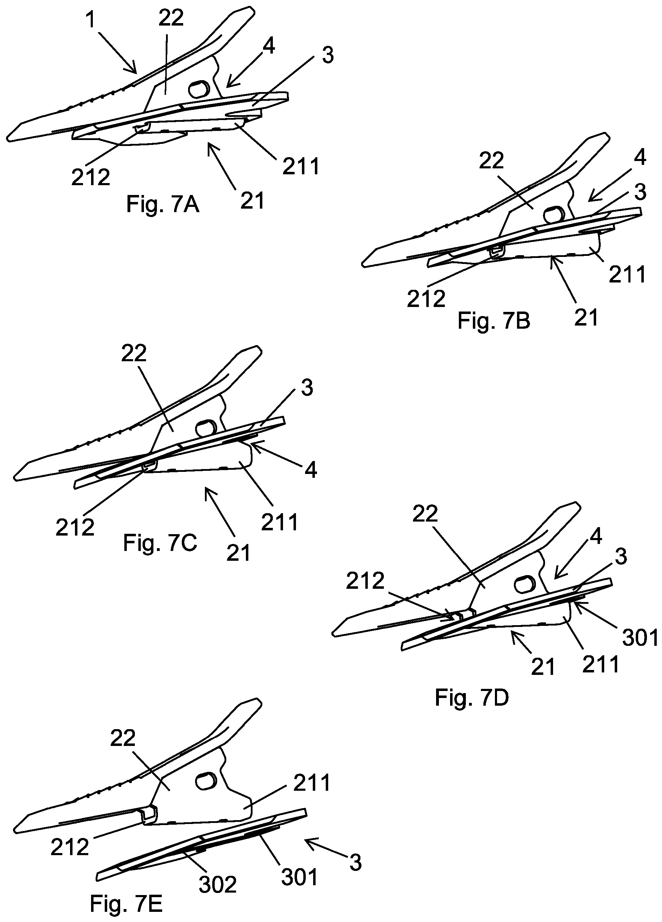

Referring to figures 7A-7E, the procedure for removing the device 100 from the coupling member 3 is shown.

The procedure is initially done by moving the rear end 211 of the first surface 21 downward (figure 7B).

When the rear protuding portion 301 is aligned with the recess 4, the coupling portion 2 is slid into the slit 35 toward the protuding portion 301 itself (figure 7C).

Since the protuding portion 301 has a smaller width than the width of slit 35, the side surfaces 22 can slide by bringing the edge of recess 4 into contact with the short side of the rectangle of slit 35 itself.

Such sliding of the coupling portion 2 frees the front end 212 of the lower surface 21 from the interference of the protuding portion 302.

The same front end 212 can then be lifted (figure 7D) and removed from slit 35 by a simple forward slide.

Insertion of the coupling member 3 is done by performing the above steps in reverse order.

Once the coupling member 3 is coupled to the device 100, the tip 210 of the support 200 is inserted into the space identified by the side surfaces 22, the lower surface 21 and the operating portion 1 of the device 100 itself.

Different types of supports can also be used.

The advantages of the invention, particularly of the second embodiment presented, which allows the engagement and disengagement of the coupling member with respect to the device without the use of additional tools or means of attachment, are evidents.

This, moreover, increases the versatility of the device, which can be used for different agricultural operations by simply uncoupling the engagement element and replacing it with another, avoiding the need to disassemble and assemble the entire device.

By means of the present invention, in fact, a user will be able to interchangeably use the device 100 comprising both the operating portion 1 and the coupling member 3, or the operating portion 1 alone by replacing the coupling member 3 with the plate 30.

The present invention has been described by way of example, but not limitation, according to its preferred embodiments, but it is to be understood that variations and/or modifications may be made by the skilled person in the art, without departing from the relevant scope of protection of the attached claims.

## Claims

1. A device (100) for agricultural work, comprising an operating portion (1) intended to contact the soil for performing the work, a coupling portion (2) attached to the operating portion (1), and a coupling member (3) intended to be coupled to a support (200) of an agricultural equipment or a tractor machine, wherein
the coupling portion (2) comprises a lower surface (21) and at least one side surface (22) connecting the operating portion (1) to the lower surface (21), **characterized in that**
the coupling member (3) comprises a slit (35), accommodating the coupling portion (2) when the device (100) is in use, and having a rear protruding portion (301) and a front protruding portion (302) which couple by interference the coupling portion (2) to the coupling member (3) in contact with the lower surface (21).

2. Device (100) according to claim 1, **characterized in that** the lower surface (21) has a rear end (211) and a front end (212), and the at least one side surface (22) has a recess (4) in correspondence with the rear end (211) to allow the at least one side surface (22) to slide along the slit (35).

3. Device (100) according to claim 2, **characterized in that**, when the coupling member (3) is engaged to the coupling portion (2), the lower surface (21) is positioned below the rear protruding portion (301) and/or the front protruding portion (302).

4. Device (100) according to any one of claims 2 or 3, **characterized in that**, when the coupling member (3) is coupled to the coupling portion (2), the at least one side surface (22) is adjacent to the rear protruding portion (301) and/or the front protruding portion (302).

5. Device (100) according to any one of claims 2-4, **characterized in that** the distance between the rear end (211) and the operating portion (1) is greater than the distance between the front end (212) and the operating portion (1).

6. Device (100) according to any one of claims 2-5, **characterized in that** the rear protruding portion (301) and/or the front protruding portion (302) have a width less than the width of the slit (35).

## Patentansprüche

1. Vorrichtung (100) für landwirtschaftliche Arbeiten, umfassend einen Arbeitsabschnitt (1), der dazu bestimmt ist, mit dem Boden in Kontakt zu kommen, um die Arbeit auszuführen, einen Kupplungsabschnitt (2), der an dem Arbeitsabschnitt (1) angebracht ist, und ein Kupplungselement (3), das dazu bestimmt ist, mit einem Träger (200) eines landwirtschaftlichen Geräts oder einer Traktormaschine gekoppelt zu werden, wobei
der Kupplungsabschnitt (2) eine untere Fläche (21) und mindestens eine Seitenfläche (22) aufweist, die den Betätigungsabschnitt (1) mit der unteren Fläche (21) verbindet, **dadurch gekennzeichnet, dass**
das Kupplungselement (3) einen Schlitz (35) umfasst, der den Kupplungsabschnitt (2) aufnimmt, wenn die Vorrichtung (100) in Gebrauch ist, und einen hinteren vorstehenden Abschnitt (301) und einen vorderen vorstehenden Abschnitt (302) aufweist, die den Kupplungsabschnitt (2) mit dem Kupplungselement (3) in Kontakt mit der unteren Fläche (21) durch Übermaß koppeln.

2. Vorrichtung (100) nach Anspruch 1, **dadurch gekennzeichnet, dass** die untere Fläche (21) ein hinteres Ende (211) und ein vorderes Ende (212) aufweist, und dass die mindestens eine Seitenfläche (22) in Übereinstimmung mit dem hinteren Ende (211) eine Aussparung (4) aufweist, damit die mindestens eine Seitenfläche (22) entlang des Schlitzes (35) gleiten kann.

3. Vorrichtung (100) nach Anspruch 2, **dadurch gekennzeichnet, dass**, wenn das Kupplungselement (3) mit dem Kupplungsabschnitt (2) in Eingriff steht, die untere Fläche (21) unter dem hinteren vorstehenden Abschnitt (301) und/oder dem vorderen vorstehenden Abschnitt (302) angeordnet ist.

4. Vorrichtung (100) nach einem der Ansprüche 2 oder 3, **dadurch gekennzeichnet, dass**, wenn das Kupplungselement (3) mit dem Kupplungsabschnitt (2) gekoppelt ist, die mindestens eine Seitenfläche (22) an den hinteren vorspringenden Abschnitt (301) und/oder den vorderen vorspringenden Abschnitt (302) angrenzt.

5. Vorrichtung (100) nach einem der Ansprüche 2-4, **dadurch gekennzeichnet, dass** der Abstand zwischen dem hinteren Ende (211) und dem Bedienungsabschnitt (1) größer ist als der Abstand zwischen dem vorderen Ende (212) und dem Bedienungsabschnitt (1).

6. Vorrichtung (100) nach einem der Ansprüche 2-5, **dadurch gekennzeichnet, dass** der hintere vorspringende Abschnitt (301) und/oder der vordere vorspringende Abschnitt (302) eine geringere Breite als die Breite des Schlitzes (35) aufweisen.

## Revendications

1. Dispositif (100) pour travaux agricoles, comprenant une partie opérationnelle (1) destinée à entrer en contact avec le sol pour effectuer les travaux, une partie d'accouplement (2) fixée à la partie opérationnelle (1), et un élément d'accouplement (3) destiné à être accouplé à un support (200) d'un équipement agricole ou d'un tracteur, dans lequel
la partie de couplage (2) comprend une surface inférieure (21) et au moins une surface latérale (22) reliant la partie de commande (1) à la surface inférieure (21), **caractérisée par le fait que**
l'élément de couplage (3) comprend une fente (35), accueillant la partie de couplage (2) lorsque le dispositif (100) est utilisé, et présentant une partie saillante arrière (301) et une partie saillante avant (302) qui couplent par interférence la partie de couplage (2) à l'élément de couplage (3) en contact avec la surface inférieure (21).

2. Dispositif (100) selon la revendication 1, **caractérisé en ce que** la surface inférieure (21) a une extrémité arrière (211) et une extrémité avant (212), et la au moins une surface latérale (22) a un renfoncement (4) en correspondance avec l'extrémité arrière (211) pour permettre à la au moins une surface latérale (22) de glisser le long de la fente (35).

3. Dispositif (100) selon la revendication 2, **caractérisé par le fait que**, lorsque l'élément de couplage (3) est engagé dans la partie de couplage (2), la surface inférieure (21) est positionnée sous la partie saillante arrière (301) et/ou la partie saillante avant (302).

4. Dispositif (100) selon l'une quelconque des revendications 2 ou 3, **caractérisé en ce que**, lorsque l'élément de couplage (3) est couplé à la partie de couplage (2), la surface latérale (22) au moins est adjacente à la partie saillante arrière (301) et/ou à la partie saillante avant (302).

5. Dispositif (100) selon l'une des revendications 2-4, **caractérisé par le fait que** la distance entre l'extrémité arrière (211) et la partie opérative (1) est supérieure à la distance entre l'extrémité avant (212) et la partie opérative (1).

6. Dispositif (100) selon l'une des revendications 2-5, **caractérisé par le fait que** la partie saillante arrière (301) et/ou la partie saillante avant (302) ont une largeur inférieure à la largeur de la fente (35).
